# EUROPEAN PATENT APPLICATION

(11) **EP 2 398 131 A2**
(43) Date of publication of application: **21.12.2011**
(21) Application number: 11158193.0
(22) Date of filing: 15.03.2011
(51) Int. Cl.: H02K 3/50

(54) **Wiring component of rotating electrical machine for vehicle**

(30) Priority: 21.06.2010 JP 2010140821
(71) Applicant: AISIN SEIKI KABUSHIKI KAISHA, Kariya-shi, Aichi 448-8650 (JP)
(72) Inventor: Sugiyama, Toshiya, Kariya-shi, Aichi 448-8650 (JP); Yamada, Yasutoshi, Kariya-shi, Aichi 448-8650 (JP)
(74) Representative: TBK

(57) **Abstract**

A wiring component of a rotating electrical machine for a vehicle, includes a segment wire (27, 28, 29) made of a conductive wire rod and arranged in a circumferential direction (26) of the rotating electrical machine, wherein the segment wire (27, 28, 29) includes a main body portion (41) having a first straight portion (441), a second straight portion (451) formed at each end portion of the main body portion (41) by bending in a radial direction (21) of the rotating electrical machine so as to have an obtuse angle (44) between the first and second straight portions (411) (451) and an upright portion (31) formed at the second straight portion (451) by bending in a rotational axis direction (25) of the rotating electrical machine, and wherein the upright portions (31) of the segment wires (27, 28, 29) being adjacent to each other are in conduction with each other.

## Description

### TECHNICAL FIELD

This disclosure relates to a wiring component of a rotating electrical machine for a vehicle, the rotating electrical machine being used at a power train of an electric automobile, a hybrid vehicle and the like.

### BACKGROUND DISCUSSION

A rotating electrical machine for a vehicle generally includes a stator configured by a plurality of segmented cores arranged in a circumferential direction of the stator in order to increase an occupancy of a coil within the stator. Each of the segmented cores is prepared by winding a copper wire therearound. Each end portion of the segmented core is connected to the wiring component, and an electric power is supplied to the segmented core via the wiring component.

A known wiring component disclosed in JP2010-110144A includes a plurality of segment wires made of conductive wires and arranged in a circumferential direction so as to form a ring shape, and each of the segment wires Includes protruding portions formed at both end portions of the segment wires in a manner of bending both end portions of a main-body portion in a radial direction, and upright portions respectively formed at end portions of the protruding portions in a manner of bending one of end portions of each of the protruding portions at positions where the protruding portions protrude in a radial direction. Both of the upright portions being adjacent to each other are joined at the power supplying terminal.

However, according to the known rotating electrical machine, because a bending work is applied to the protruding portions and the upright portions, a space corresponding to a bent portion of each of the protruding portions and the upright portions needs to be provided, thereby increasing a protruding amount of the protruding portion in a radial direction and increasing an external diameter of the wiring component. Further, because the bending work is applied to each of the protruding portions and the upright portions, each of the end portions of the segment wire is formed in a three-dimensional shape, thereby decreasing a level of a bending workability.

A need thus exist to provide a wiring component for a vehicle, which has a relatively smaller outer diameter and has a good bending workability.

### SUMMARY

According to an aspect of this disclosure, a wiring component of a rotating electrical machine for a vehicle, includes a segment wire provided at the rotating electrical machine formed in an annular shape, made of a conductive wire rod and arranged in a circumferential direction of the rotating electrical machine, wherein the segment wire includes a main body portion having a first straight portion, a second straight portion formed at each end portion of the main body portion by bending in a radial direction of the rotating electrical machine so as to have an obtuse angle between the first straight portion and the second straight portion and an upright portion formed at the second straight portion by bending in a rotational axis direction of the rotating electrical machine, and wherein the upright portions of the segment wires being adjacent to each other are in conduction with each other.

In this configuration, because each of the end portions of the segment wire is bent in the approximate radial direction at the obtuse angle in order to form the second straight portion, the second straight portion is formed while keeping an increment of the outer diameter of the stator to be low. Further, because of the second straight portion securely formed at each of the end portions of the segment wire, the general-purpose processing machine may be used for preparing the segment wires, thereby increasing a level of bending workability.

According to another aspect of this disclosure, the upright portions of the segment wires being adjacent to each other are joined by fusing.

Because the upright portions, being adjacent to each other, are joined together by means of fusing so as to be in conduction with each other, the upright portions are surely and firmly joined together.

According to further aspect of this disclosure, a plurality of the wiring components are provided in such a way that the wiring components are coaxial in the rotational axis direction of the rotating electrical machine.

Because the wire coils are arranged in such a way that the wire coils are coaxial in the rotational axis direction, even when the number of the phase is increased, the external diameter of the stator may not be changed.

According to yet further aspect of this disclosure, the rotating electrical machine is configured by three phases, a U-phase, a V-phase and a W-phase, and wherein the upright portions are provided at each of the U-phase, the V-phase and the W-phase, and end surfaces of the upright portions of the U-phase, the V-phase and the W-phase are aligned on an imaginary plane that extend so as to be orthogonal to the rotational axis direction.

Because positions of the end surfaces of the upright portions of the wire coils may be aligned at the same level in the rotational axis direction, the segmented cores are commonly used for each of the phases.

According to yet another aspect of this disclosure, the upright portions of the segment wires being adjacent to each other are joined by a terminal.

Because the upright portions being adjacent to each other are joined at the power supplying terminal, one end of the coil of the segmented core is connected to the upright portions of the wire coil at the power supplying terminal.

According to another aspect of this disclosure, the segment wire is coated so as to be in an insulating sate.

Because each of the end portions of the segment wire is bent in the radial direction at the obtuse angle in order to form the second straight portion, the protruding portion is formed while keeping an increment of the outer diameter of the stator to be low, and a possibility of damage to the insulated coating may be decreased.

According to another aspect of this disclosure, a wiring component of a rotating electrical machine for a vehicle, includes a segment wire provided at the rotating electrical machine formed in an annular shape, made of a conductive wire rod and arranged in a circumferential direction of the rotating electrical machine, wherein the segment wire includes a main body portion having a first straight portion, a second straight portion formed at each end portion of the main body portion by bending in a radial direction of the rotating electrical machine so as to have an obtuse angle between the first straight portion and the second straight portion, a protruding portion formed so as to extend from the second straight portion and an upright portion formed at the second straight portion by bending in a rotational axis direction of the rotating electrical machine so as to extend in the rotational axis direction of the rotating electrical machine, and wherein the upright portions of the segment wires being adjacent to each other are in conduction with each other.

In this configuration, because each of the end portions of the segment wire is bent in the approximate radial direction at the obtuse angle in order to form the protruding portion, the protruding portion is formed while keeping an increment of the outer diameter of the stator to be low. Further, because of the protruding portion securely formed at each of the end portions of the segment wire, the general-purpose processing machine may be used for preparing the segment wires, thereby increasing a level of bending workability.

### BRIEF DESCRIPTION OF THE DRAWINGS

The foregoing and additional features and characteristics of this disclosure will become more apparent from the following detailed description considered with the reference to the accompanying drawings, wherein:

Fig. 1 illustrates a flat view indicating a stator of a rotating electrical machine for a vehicle related to an embodiment;

Fig. 2 illustrates a partial enlargement flat view of the stator of the rotating electrical machine for the vehicle related to the embodiment;

Fig. 3 illustrates a flat view of a bus ring of the embodiment;

Fig. 4 illustrates a partial oblique perspective view for explaining an inside of the bus ring seen from an outer in a radial direction thereof;

Fig. 5 illustrates an oblique perspective view of a U-phase segment wire of the embodiment;

Fig. 6 illustrates a front view of the U-phase segment wire of the embodiment; and

Fig. 7 illustrates a flat view of the U-phase segment wire of the embodiment.

### DETAILED DESCRIPTION

A rotating electrical machine for a vehicle, the rotating electrical machine having a wiring component, will be explained.

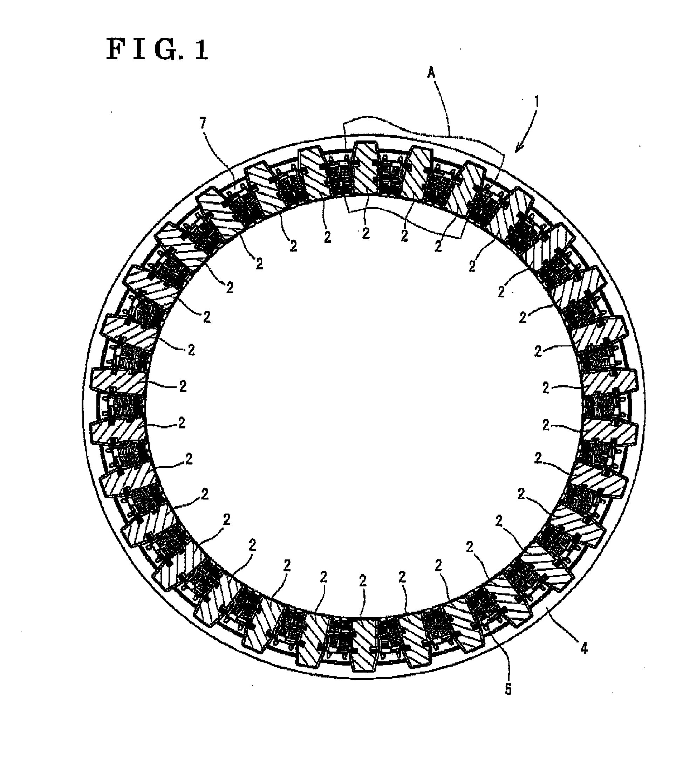

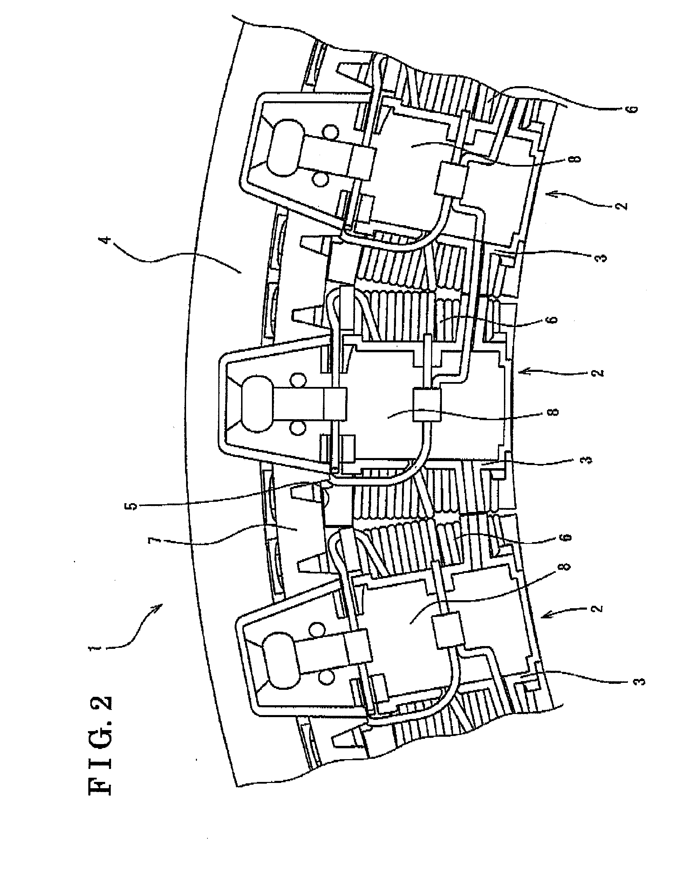

Fig. 1 illustrates a flat view indicating a stator 1 of the rotating electrical machine for the vehicle related to an embodiment of this disclosure, and Fig. 2 illustrates a partial enlargement flat view of a portion A of the stator indicated in Fig, 1. For the purpose of convenience, the stator 1 Illustrated in Fig. 2 is not filled with insulating resin material that will be explained later. The segmented core 2 is configured by layered silicon steel plates to which a resin housing 3 is attached, and in this embodiment, ten segmented cores 2 are arranged on an inner circumferential surface 5 of a stator housing 4 so as to form a core of a single phase. In this embodiment, thirty segmented cores 2 are used in total to form the core of three phases. An enamel-coated copper wire is wound around each of the segmented cores 2 to form a coil 6. A bus ring 7, used for supplying electric power to each coil 6, is arranged on the inner circumferential surface 5 of the stator housing 4 so as to be adjacent to the segmented cores 2. A housing space 8, defined by the resin housing 3 and the bus ring 7, is filled with the insulating resin material.

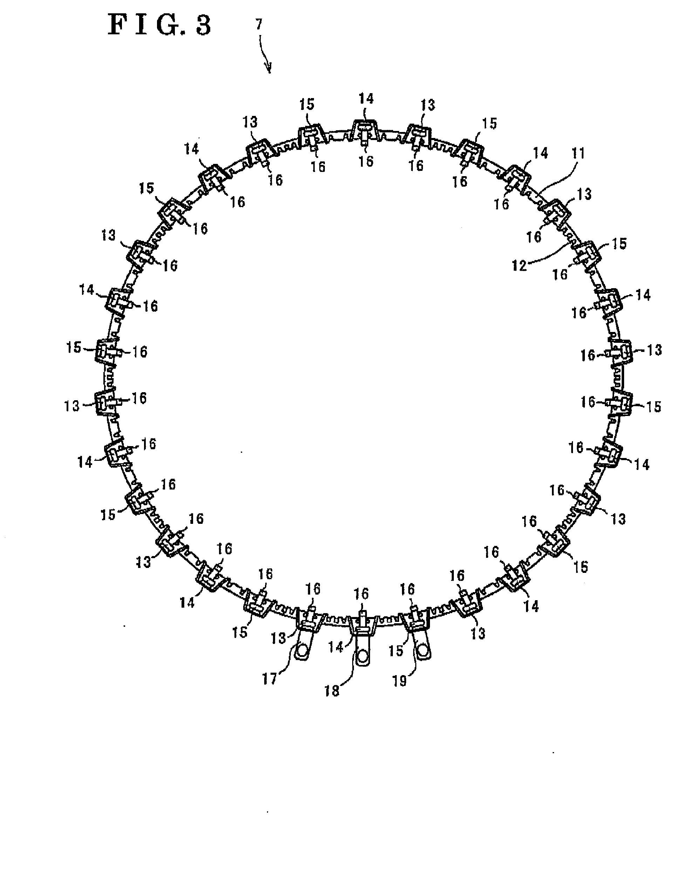

Fig. 3 illustrates a flat view of the bus ring 7 of the embodiment. The bus ring 7 includes an outer clip 11 and an inner clip 12 each of which is made of an insulation material and is formed in an annular shape, and the outer clip 91 and the inner clip 92 are fitted to each other. A U-phase wire coil 13 for a U-phase, a V-phase wire coil 14 for a V-phase and a W-phase wire coil 15 for a W-phase are held by the outer clip 11 and the inner clip 12, and a power supplying terminal 16 is connected to each of the wire coils 13 through 15 in order to supply electricity to each of the coils 6. Further, at three portions of the outer clip 11, a U-phase external terminal 17, a V-phase external terminal 18 and a W-phase external terminal 19 are provided so as to protrude from the outer clip 11. Each of the terminals 17 through 19 is connected to an external controlling circuit corresponding to each phase. Within the bus ring 7, the U-phase external terminal 17 is connected to the U-phase wire coil 13, the V-phase external terminal 18 is connected to the V-phase wire coil 14 and the W-phase external terminal 19 is connected to the W-phase wire coil 15.

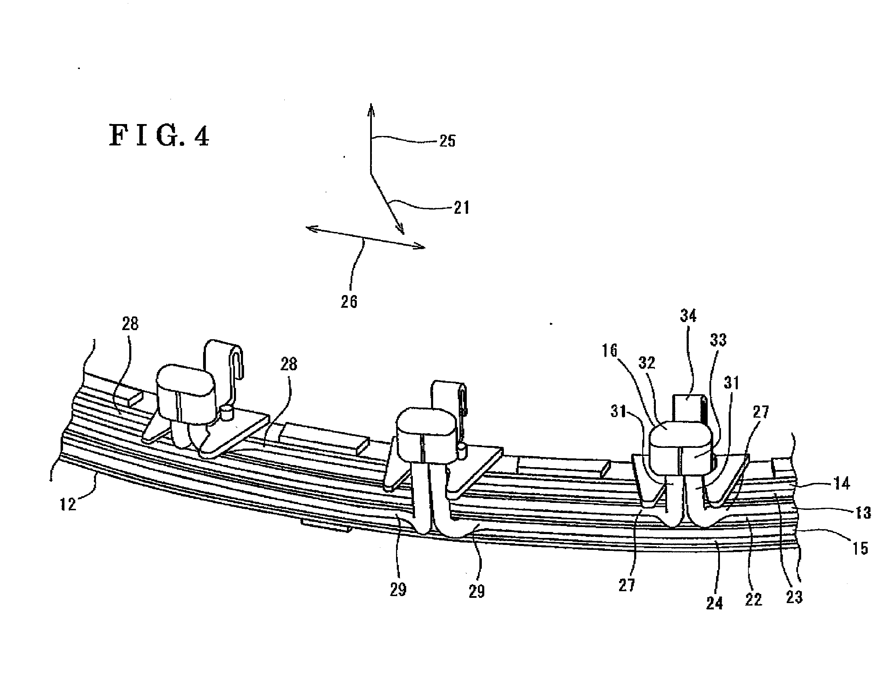

Fig. 4 illustrates a partial oblique perspective view for explaining inside of the bus ring 7 seen from the outer in a radial direction 21 of the rotating electrical machine. In the partial oblique perspective view, the outer clip 11 is detached from the bus ring 7 for a convenience purpose. On an outer circumferential surface of the inner clip 12, a U-phase groove 22, a V-phase groove 23 and a W-phase groove 24 are formed so as to be in parallel with each other in a rotational axis direction 25 of the rotating electrical machine. In this structure, the U-phase wire coil 13 is held within the U-phase groove 22, the V-phase wire coil 14 is held within the V-phase groove 23, and the W-phase wire coil 15 is held within the W-phase groove 24, where each of the wires is insulated from each other. The U-phase wire coil 13 is configured by a plurality of U-phase segment wires 27 arranged in a circumferential direction 26 of the bus ring 7 of the rotating electrical machine, the V-phase wire coil 14 is configured by a plurality of V-phase segment wires 28 arranged in the circumferential direction 26 of the bus ring 7, and the W-phase wire coil 15 is configured by a plurality of W-phase segment wires 29 arranged in the circumferential direction 26 of the bus ring 7. Hereinafter, only a configuration of the U-phase wire coil 13 will be explained in detail, however, the configuration may be applied to the V-phase wire coil 14 and the W-phase wire coil 15.

The U-phase segment wire 27 includes upright portions 31 each of which formed at each of end portions 42 of the U-phase segment wire 27, the upright portion 31 formed so as to extend in the rotational axis direction 25 of the rotating electrical machine. Because the U-phase segment wires 27 are arranged in the circumferential direction of the bus ring 7, the upright potion 31 formed at one of the end portions 42 of the U-phase segment wire 27 is adjacent to the upright portion 31 formed at the other of the end portions 42 of the adjacent U-phase segment wire 27. In this configuration, the upright portions 31 being adjacent to each other are joined at the power supplying terminal 16 by means of caulking. Further, welding is applied to end surfaces 32 of the upright portions 31 being adjacent to each other. The power supplying terminal 16 includes a caulking portion 33 at which the upright portions 31 of the U-phase segment wire 27 are caulked and a coil engaging portion 34 formed so as to extend from the caulking portion 33 inwardly in a radial direction 21 of the bus ring 7 of the rotating electrical machine. A top end portion of the coil engaging portion 34 is formed in an inverted U-shape in Fig. 4, and one end of the coil is conductively engaged with the top end portion of the coil engaging portion 34 by means of thermal caulking, and the other end of the coil is connected to a neutral bus ring. An extending lengths of the upright portions 31 of the U-phase segment wire 27, the V-phase segment wire 28 and the W-phase segment wire 29 (hereinafter referred to as the segment wires 27 through 29) in the rotational axis direction 25 are set to be different from each other. Specifically, the extending lengths are differently set depending on positions where the segment wires 27 through 28 are attached, so that the end surfaces 32 of the upright portions 31 of the segment wires 27 through 29 are aligned at the same height in the rotational axis direction 25 as illustrated in Fig. 4.

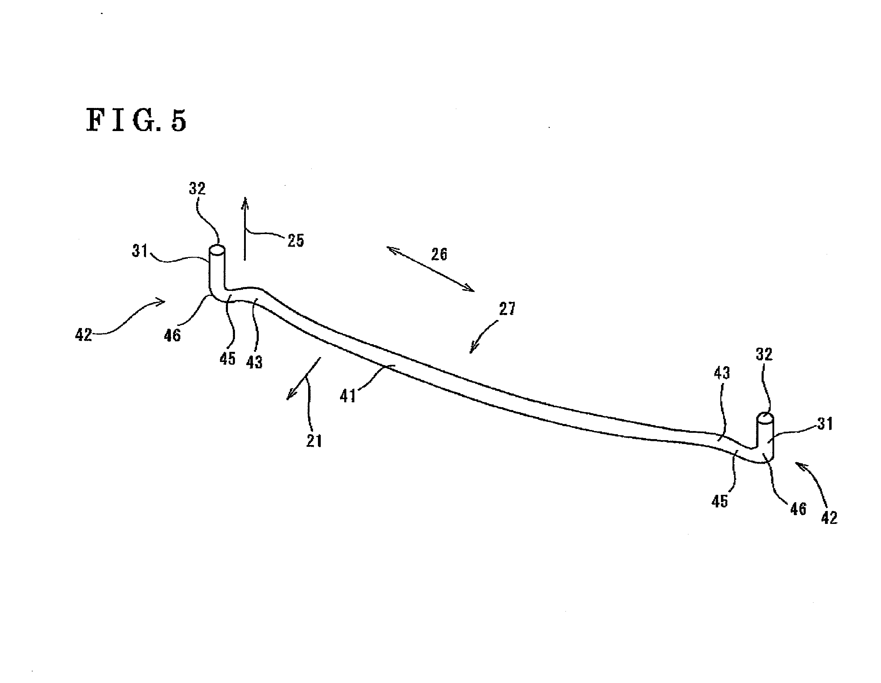

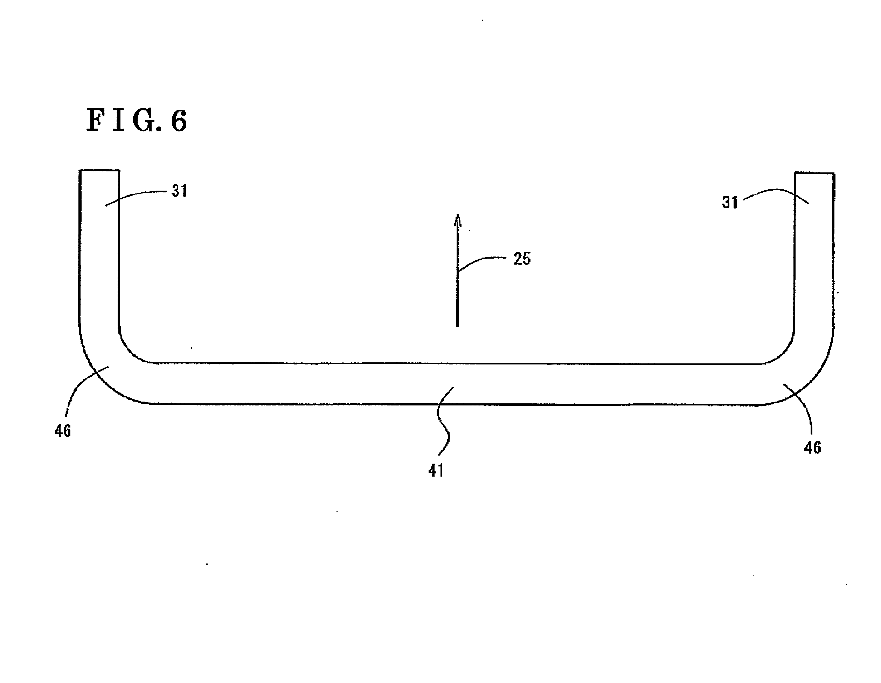

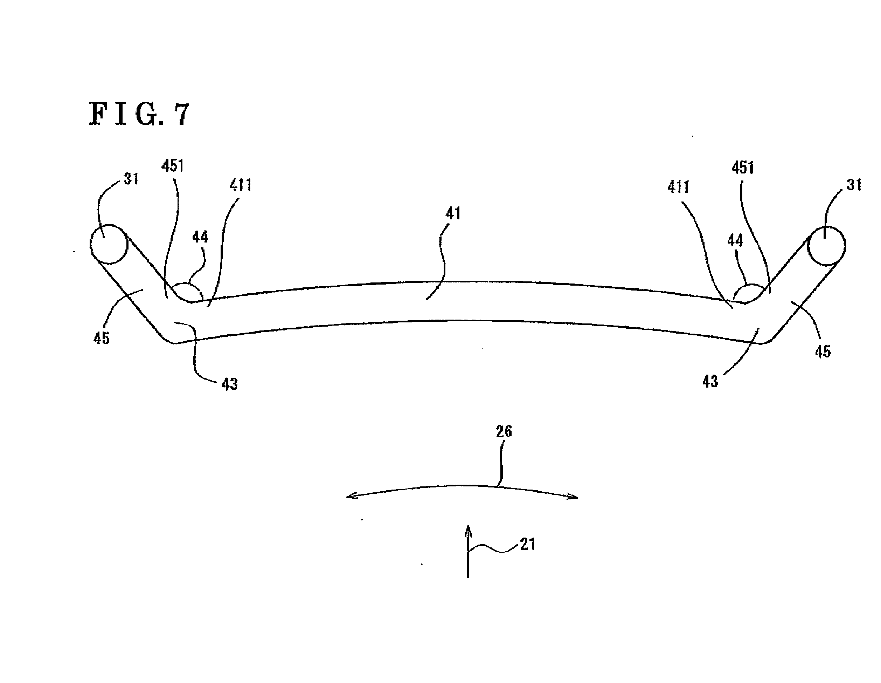

Fig. 5 is an oblique perspective view of the U-phase segment wire 27 of the embodiment, Fig. 6 is a front view of the U-phase segment wire 27 of the embodiment and Fig. 7 is a flat view of the U-phase segment wire 27 of the embodiment. The U-phase segment wire 27 is made of an enamel coated copper wire (e.g., a conductive wire rod) and is configured mainly by a main body portion 41 and the end portion 42 that is provided at each end of the main body portion 41. The main body portion 41 includes a central portion being circularly curved and first straight portions 411 respectively formed so as to linearly extend at each end of the central portion. The end portion 42 is formed so as to include a first bending portion 43, a second straight portion 451, a protruding portion 45, a second bending portion 46, and the upright portion 31. Specifically, the U-phase segment wire 27 is bent at each of the first bending portions 43 in the radial direction 21 so as to have an obtuse angle 44 between the first straight portion 411 and the second straight portion 451 and further outwardly extends in an approximate radial direction 21 so as to form the protruding portion 45. Further, each of the protruding portions 45, extending in the approximate radial direction 21, is bent at the second bending portion 46 in the rotational axis direction 25 so as to form the upright portion 31.

An excitation current from the external controlling circuit is supplied to the U-phase external terminal 17 via a conducting wire, and the excitation current passes through the U-phase wire coil 13 connected to the U-phase external terminal 17 and reaches each of the coils 6 corresponding to the U-phase via each corresponding power supplying terminal 16. The excitation current is supplied to the coils 6 corresponding to each of the V-phase and W-phase in the same manner as that of the U-phase. By controlling the timing of the excitation current to be supplied to each phase, a rotating magnetic field is generated at the stator 1, and the generated rotating magnetic field acts on a permanent magnet of a rotor. The rotating electrical machine is driven as an electric motor when the rotor is rotated in synchronization with a frequency of the rotating magnetic field. In a case where the rotating electrical machine is driven as a power generator, a rotor having a permanent magnet is firstly rotated by an external power, and then electro motive force is generated at each coil 6 of the stator 1 by an electromagnetic induction caused in accordance with changes of magnetic flux.

In this configuration, at each of the end portions 42 of the U-phase segment wire 27, the U-phase segment wire 27 is bent in the radial direction 21 at the obtuse angle 44 in order to form the protruding portion 45 (the second straight portion 451), the protruding portion 45 is formed while keeping an increment of the outer diameter of the stator 1 to be low. The outer diameter of the stator 1 tends to be increased in a case where the protruding portion 45 is formed in the radial direction 27. Because the protruding portion 45 is securely formed, a curvature of each of the first bending portion 43 and the second bending portion 46 may be reduced, and a possibility of damage to the insulated coating may be decreased. In this configuration, a general-purpose processing machine may be used for preparing the segment wires 27 through 29, thereby increasing a level of bending workability. Further, in a case where the protruding portion 46 of the U-phase segment wire 27 is formed so as to be bent at a right angle relative to the main body portion 49, the U-phase segment wire 27 is fitted to the U-phase groove 22 in such a way that one of the first bending portions 43 is adjacent to the other of the first bending portions 43. In this configuration, the length of the main body portion 41 needs to be set accurately. On the other hand, in a case where each of the protruding portions 45 is formed so as to have the obtuse angle 44 as mentioned above, a misalignment of a relative position of the main body portion 41 in the circumferential direction 26 of the bus ring 7 may be compensated by deforming the shape of the U-phase segment wire 27, thereby easing processing accuracy. Furthermore, because the protruding portion 45 is bent at each of the first bending portions 43 at the obtuse angle 44, a level of the bending angle may be decreased compared to the case where the protruding portion 45 is bent at the right angle, thereby decreasing the length of the copper wire to be used.

Further, because the upright portions 31, being adjacent to each other, are joined together by means of welding, an increment of the electric resistance may be reduced because base materials of the upright portions 31 are joined by fusing, and a level of rotating efficiency may be increased, while surely and firmly joining the upright portions 31 together. Further, in this configuration, an occurrence of heating caused by Joule heating may be decreased. Furthermore, because variations of the electric resistance may be reduced, when the stator 1 is rotated, torque fluctuations may be reduced, and a generation of an electric potential difference may be reduced, thereby reducing electromagnetic noise.

Additionally, because each of the wire coils 13 through 15 is arranged so as to be parallel to each other in the rotational axis direction 25, even when the number of the phase is increased (e.g., more than three phases), the external diameter of the stator 1 may not be changed. Further, because the wire coils 13 through 15 and the bus ring 7 are provided as a unit, a level of mountability may be increased.

Further, because positions of the end surfaces 32 of the upright portions 31 of the wire coils 13 through 15 may be aligned at the same level in the rotational axis direction 25, in other words the end surfaces 32 of the upright portions 31 of the wire coils 13 through 15 are located on a single imaginary plane that is orthogonal to the rotational axis direction 25, the segmented cores 2 are commonly used for each of the phases U through W. Furthermore, because the positions of the coil engaging portions 34 of the wire coils 13 through 15 in the rotational axis direction 25 are aligned at the same level in the rotational axis direction 25, caulking may be easily applied to the caulking portion 33, thereby increasing the level of mountability.

In this configuration, because the power supplying terminal 16 is set at the upright portion 31 of each phase, a positioning of each of the power supplying terminals 16 in the circumferential direction becomes easy. Further, because the upright portions 31 being adjacent to each other at the power supplying terminal 16 are joined, the segment wires 27 through 29 may be temporarily positioned, thereby increasing the level of mountability of the bus ring 7.

Furthermore, because the curvature of each of the first bending portion 43 and the second bending portion 46 is reduced, although each of the segment wires 27 through 29 are enamel-coated, because the enamel coating of each of the segment wires 27 through 29 is not damaged when the segment wires 27 through 29 are processed (e.g., bent), an insulation property of each of the segment wires 27 through 29 may be secured.

According to the embodiment, the main body portion of the segment wire is formed in a circular shape, however, the segment wire described above may be formed in such a way that the main body portion has angles, or the main body portion is in a straight shape. According to the embodiment, the upright portions 31 of each phase are joined by caulking and welding, however, the upright portions 31 may be joined by means of thermal caulking or solder connection. According to the embodiment, the end portions of the segment wire are formed so as to be symmetric, however, the end portions of the segment wire may be formed so as to be asymmetric. According to the embodiment, the wire coil is used for a concentrated winding stator, however, the wire coil may be used for a distributed winding stator. Further, the segment wire may be used for a multi-phase permanent magnet synchronous machine, a single-phase synchronous machine, an induction machine, a SR motor or a DC machine.

The wiring component of the rotating electrical machine for the vehicle, includes the segment wire provided at the rotating electrical machine formed in an annular shape, made of the conductive wire rod and arranged in the circumferential direction of the rotating electrical machine, wherein the segment wire includes the main body portion having the first straight portion, the second straight portion formed at each end portion of the main body portion by bending in the radial direction of the rotating electrical machine so as to have an obtuse angle between the first straight portion and the second straight portion and an upright portion formed at the second straight portion by bending in the rotational axis direction of the rotating electrical machine, and wherein the upright portions of the segment wires being adjacent to each other are in conduction with each other.

In this configuration, because each of the end portions of the segment wire is bent in the approximate radial direction at the obtuse angle in order to form the protruding portion (the second straight portion), the protruding portion (the second straight portion) is formed while keeping an increment of the outer diameter of the stator to be low. Further, because of the protruding portion (the second straight portion) securely formed at each of the end portions of the segment wire, the general-purpose processing machine may be used for preparing the segment wires, thereby increasing a level of bending workability.

The upright portions of the segment wires being adjacent to each other are joined by fusing.

Because the upright portions, being adjacent to each other, are joined together by means of fusing so as to be in conduction with each other, the upright portions are surely and firmly joined together.

The plurality of the wiring components are provided in such a way that the wiring components are coaxial in the rotational axis direction of the rotating electrical machine.

Because the wire coils are arranged in such a way that the wire coils are coaxial in the rotational axis direction, even when the number of the phase is increased, the external diameter of the stator may not be changed.

The rotating electrical machine is configured by three phases, the U-phase, the V-phase and the W-phase, and wherein the upright portions are provided at each of the U-phase, the V-phase and the W-phase, and end surfaces of the upright portions of the U-phase, the V-phase and the W-phase are aligned on an imaginary plane that extend so as to be orthogonal to the rotational axis direction.

Because positions of the end surfaces of the upright portions of the wire coils may be aligned at the same level in the rotational axis direction, the segmented cores are commonly used for each of the phases.

The upright portions of the segment wires being adjacent to each other are joined by the terminal.

Because the upright portions being adjacent to each other are joined at the power supplying terminal, one end of the coil of the segmented core is connected to the upright portions of the wire coil at the power supplying terminal.

The segment wire is coated so as to be in an insulating sate.

Because each of the end portions of the segment wire is bent in the radial direction at the obtuse angle in order to form the protruding portion (the second straight portion), the protruding portion is formed while keeping an increment of the outer diameter of the stator to be low, and a possibility of damage to the insulated coating may be decreased.

The wiring component of the rotating electrical machine for the vehicle includes the segment wire provided at the rotating electrical machine formed in an annular shape, made of the conductive wire rod and arranged in the circumferential direction of the rotating electrical machine, wherein the segment wire includes the main body portion having the first straight portion, the second straight portion formed at each end portion of the main body portion by bending in the radial direction of the rotating electrical machine so as to have an obtuse angle between the first straight portion and the second straight portion, the protruding portion formed so as to extend from the second straight portion and an upright portion formed at the second straight portion by bending in the rotational axis direction of the rotating electrical machine so as to extend in the rotational axis direction of the rotating electrical machine, and wherein the upright portions of the segment wires being adjacent to each other are in conduction with each other.

In this configuration, because each of the end portions of the segment wire is bent in the approximate radial direction at the obtuse angle in order to form the protruding portion (the second straight portion), the protruding portion (the second straight portion) is formed while keeping an increment of the outer diameter of the stator to be low. Further, because of the protruding portion (the second straight portion) securely formed at each of the end portions of the segment wire, the general-purpose processing machine may be used for preparing the segment wires, thereby increasing a level of bending workability.
A wiring component of a rotating electrical machine for a vehicle, includes a segment wire (27, 28, 29) made of a conductive wire rod and arranged in a circumferential direction (26) of the rotating electrical machine, wherein the segment wire (27, 28, 29) includes a main body portion (41) having a first straight portion (491), a second straight portion (451) formed at each end portion of the main body portion (41) by bending in a radial direction (21) of the rotating electrical machine so as to have an obtuse angle (44) between the first and second straight portions (411) (451) and an upright portion (31) formed at the second straight portion (459) by bending in a rotational axis direction (25) of the rotating electrical machine, and wherein the upright portions (31) of the segment wires (27, 28, 29) being adjacent to each other are in conduction with each other.

## Claims

1. A wiring component of a rotating electrical machine for a vehicle, comprising a segment wire (27, 28, 29) provided at the rotating electrical machine formed in an annular shape, made of a conductive wire rod and arranged in a circumferential direction (26) of the rotating electrical machine,
wherein the segment wire (27, 28, 29) includes:
a main body portion (41) having a first straight portion (411);
a second straight portion (451) formed at each end portion of the main body portion (41) by bending in a radial direction (21) of the rotating electrical machine so as to have an obtuse angle (44) between the first straight portion (411) and the second straight portion (451); and
an upright portion (31) formed at the second straight portion (451) by bending in a rotational axis direction (25) of the rotating electrical machine, and wherein the upright portions (31) of the segment wires (27, 28, 29) being adjacent to each other are in conduction with each other.

2. The wiring component of the rotating electrical machine for the vehicle according to Claim 1, wherein the upright portions (31) of the segment wires (27, 28, 29) being adjacent to each other are joined by fusing.

3. The wiring component of the rotating electrical machine for the vehicle according to Claim 1 or 2, wherein a plurality of the wiring components are provided in such a way that the wiring components are coaxial in the rotational axis direction (25) of the rotating electrical machine.

4. The wiring component of the rotating electrical machine for the vehicle according to any one of Claim 1 through Claim 3, wherein the rotating electrical machine is configured by three phases, a U-phase, a V-phase and a W-phase, and wherein the upright portions (31) are provided at each of the U-phase, the V-phase and the W-phase, and end surfaces (32) of the upright portions (31) of the U-phase, the V-phase and the W-phase are aligned on an imaginary plane that extend so as to be orthogonal to the rotational axis direction (25).

5. The wiring component of the rotating electrical machine for the vehicle according to any one of Claim 1 through Claim 4, wherein the upright portions (31) of the segment wires (27, 28, 29) being adjacent to each other are joined by a terminal.

6. The wiring component of the rotating electrical machine for the vehicle according to any one of Claim 1 through Claim 5, wherein the segment wire (27, 28, 29) is coated so as to be in an insulating sate.
